(19) Europäisches Patentamt
European Patent Office
Office européen des brevets

(11) **EP 4 040 188 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **21155922.4**

(22) Anmeldetag: **09.02.2021**

(51) Internationale Patentklassifikation (IPC):
**G01S 7/491** (2020.01)   **G01S 7/4912** (2020.01)
**G01S 17/50** (2006.01)   **G01B 9/02** (2022.01)
**G01S 17/58** (2006.01)   **G01S 17/87** (2020.01)
**G01B 11/04** (2006.01)

(52) Gemeinsame Patentklassifikation (CPC):
**G01S 17/58; G01B 11/043; G01S 7/4916; G01S 17/87;** G01B 9/02092

(54) **VORRICHTUNG UND VERFAHREN ZUR VERMESSUNG EINES OBJEKTES**

DEVICE AND METHOD FOR MEASURING AN OBJECT

DISPOSITIF ET PROCÉDÉ DE MESURE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.08.2022   Patentblatt 2022/32**

(73) Patentinhaber: **SICK AG
79183 Waldkirch (DE)**

(72) Erfinder:
• **Wintermantel, Johannes
78183 Hüfingen (DE)**
• **Kagelmacher, Linda
78087 Mönchweiler (DE)**

(74) Vertreter: **Ludewigt, Christoph
Sick AG
Intellectual Property
Erwin-Sick-Strasse 1
79183 Waldkirch (DE)**

(56) Entgegenhaltungen:
WO-A1-2009/113001     US-A1- 2020 064 249
US-B2- 10 379 028

**Beschreibung**

Die Erfindung betrifft eine Vorrichtung und ein Verfahren zur Vermessung eines Objektes nach dem Oberbegriff von Anspruch 1 beziehungsweise Anspruch 15.

In der wissenschaftlichen Veröffentlichung "VCSEL-based miniature laser-Doppler interferometer" (Proc. SPIE 6908, Vertical-Cavity Surface-Emitting Lasers XII, 69080I (29 January 2008); https://doi.org/10.1117/12.775131), ist eine auf Laserlicht basierende Technologie beschrieben, bei der ein sich bewegendes Objekt mit Messstrahl aus kohärentem Laserlicht beleuchtet wird. Ein Teil des ausgesendeten Lichts wird an der Oberfläche des sich bewegenden Objektes diffus reflektiert und gelangt so zurück zum Laser, wobei dieser diffus rückreflektierte Teil des ausgesandten Lichts aufgrund des durch die Bewegung des Objektes hervorgerufenen Doppler-Effekts einen Phasenversatz zu dem ausgesandten Licht erfährt. Im Laserresonator ergibt sich eine selbstmischende Interferenz zwischen dem ausgesandten und rückreflektierten Licht, wodurch eine periodische Schwingung der Intensität des Lasers entsteht. Dadurch wird ein moduliertes Messsignal erzeugt. Anhand der Frequenzänderung und der Signalform der Intensität können eine Geschwindigkeit und eine Richtung des sich bewegenden Objektes detektiert werden. Das Grundprinzip sowie verschiedene Anwendungsmöglichkeiten dieses "selbst-mischende Interferenz" (self-mixing interference, SMI) genannten Wirkprinzips sind beispielsweise auch in den wissenschaftlichen Veröffentlichungen "Laser diode self-mixing technique for sensing applications" (Guido Giuliani et al 2002 J. Opt. A: Pure Appl. Opt. 4 S283, https://doi.org/10.1088/1464-4258/4/6/371) sowie "Laser feedback interferometry: a tutorial on the self-mixing effect for coherent sensing" (Thomas Taimre et al, Adv. Opt. Photon. 7, 570-631 (2015), https://doi.org/10.1364/AOP.7.000570) beschrieben.

Aus der EP 1 261 877 B1 ist die Verwendung eines nach den dem SMI-Wirkprinzip arbeitenden Sensors (im Folgenden SMI-Sensor genannt) zur Messung einer Bewegung eines Papierbogens relativ zum SMI-Sensor offenbart. Zur Verbesserung der Geschwindigkeitsmessung wird eine Sensoranordnung mit zwei SMI-Sensoren vorgeschlagen, deren Messachsen mit entgegengesetzten Winkeln in Bezug auf eine Normale zur Bewegungsebene der Papierbahn angeordnet sind. Damit werden in den beiden SMI-Sensoren jeweils entgegengesetzte Interferenzeffekte erzeugt. Dadurch kann der Betrag der Geschwindigkeit durch Subtrahieren der Detektorsignale bestimmt werden, während die Bewegungsrichtung durch Vergleichen der Asymmetrien der Detektorsignale ermittelt werden kann. In der EP 1 261 877 B1 wird jedoch lediglich eine Bewegungsmessung von flächigen, also zweidimensionalen Objekten wie Papierbögen offenbart, eine absolute Längenbestimmung, insbesondere von dreidimensionalen Objekten findet nicht statt.

In der EP 3 035 001 A1 ist eine Vorrichtung zur absoluten Positionsbestimmung eines sich bewegenden Objektes gezeigt, die ebenfalls auf der Verwendung von SMI-Sensoren basiert. Auf einer Oberfläche des Objekts angeordnete Codierungsmarken erzeugen bei Detektion durch den SMI-Sensor eine charakteristische Amplitudenänderung des Sensorsignals und ermöglichen so eine Positionsbestimmung des Objektes. Nachteilig hierbei ist, dass die Objekte mit entsprechenden Codierungsmarken versehen sein müssen.

Ein SMI-Sensor kann lediglich Radialgeschwindigkeiten abgetasteter Objektpunkte bestimmen, also die Geschwindigkeit des jeweils abgetasteten Objektpunktes eines bewegten Objektes in Richtung einer Messachse des SMI-Sensors. Mit dem Winkel zwischen der Messachse des SMI-Sensors und der Bewegungsrichtung des Objekts lässt sich dann die Geschwindigkeit des Objekts in Bewegungsrichtung bestimmen. Bewegt sich ein Objekt, beispielsweise in Form eines Quaders, durch eine Messachse eines SMI-Sensors, kann aus der der Geschwindigkeitsmessung des SMI-Sensors ein Übergang des Messstrahls von einer Seitenfläche auf eine Deckfläche des Quaders nicht ermittelt werden, da die vom SMI-Sensor bestimmte Radialgeschwindigkeit gleichbleibt, unabhängig davon, ob Seitenfläche oder Deckfläche des Quaders abgetastet werden. Eine Detektion einer Kante des Quaders ist auf diese Weise daher nicht möglich.

Eine ähnliche Problematik ergibt sich, wenn sich das Objekt auf einem Transportmedium, beispielsweise einem Förderband, befindet. Üblicherweise bewegt sich das Transportmedium mit derselben Geschwindigkeit wie das Objekt auf dem Transportmedium, der SMI-Sensor misst also immer dieselbe Geschwindigkeit, egal ob er das Transportmedium oder das darauf liegende Objekt abtastet. Um dennoch Objekte auf dem Transportmedium erkennen zu können, werden daher üblicherweise weitere Sensoren, beispielsweise Lichtschranken verwendet, um Objekte auf dem Transportmedium zu erkennen. Unterbricht ein Objekt auf dem Transportmedium die Lichtschranke, so lässt sich aus der Länge der Unterbrechung und der vom SMI-Sensor bestimmten Objektgeschwindigkeit die Länge des Objekts in Bewegungsrichtung des Transportmediums ermitteln.

Die US 10 379 028 beschreibt einen optischen Sensor nach dem SMI-Prinzip, wobei zwei verschiedene Fokus-Entfernungen realisiert werden, um verschiedene physikalische Parameter zu detektieren beispielsweise ein Partikel-Erkennung im Nahbereich und eine Gesten-Erkennung im Fernbereich. Die beiden Messsignale werden nicht zur kooperativen Bestimmung von Objekteigenschaften benutzt.

Aus der US 2020/064249 ist ein Sensor nach dem SMI-Prinzip zur Feinstaubmessung bekannt. Zwei Laserstrahlen werden zum jeweiligen Selbst-Mischen verwendet. Eine Geschwindigkeits-Komponente wird über die Selbst-Interferenz der Partikelsignale im jeweiligen Laser bestimmt (FFT, Doppler-Processing). Eine weitere Geschwindigkeits-Komponente wird über die Flugzeit zwischen den Laser-Fokus-Punkten bestimmt. Durch die Anordnung mindestens eines weiteren SMI-Lasers kann die weitere Geschwindigkeits-Komponente ermittelt werden. Die Partikelgröße wird über die Intensität des Signals bestimmt. Es werden zwar zwei Messsignale zur kooperativen Bestimmung der Geschwindigkeit eines Objekts (Partikel) verwendet, jedoch nicht zur Bestimmung der Länge (Größe) des Objekts.

Das Dokument WO 2009/113001 offenbart die Verwendung mehrerer SMI-Sensoren zur Messung von Geschwindigkeiten und Abständen einer Fahrzeugkarosserie zu (mindestens) einem Rad und zu einer Fahrbahn, um Reibung und Schlupf zwischen Rad und Fahrbahn zu bestimmen. Eine Längenbestimmung eines Objekts findet nicht statt

Es ist daher Aufgabe der Erfindung, eine Anordnung von SMI-Sensoren derart weiterzubilden, dass sie zur Längenbestimmung von bewegten dreidimensionalen, insbesondere quaderförmigen Objekten geeignet ist, ohne Daten weiterer Sensoren oder spezielle Markierungen an den Objekten verwenden zu müssen.

Die Aufgabe wird erfindungsgemäß gelöst durch eine Vorrichtung und ein Verfahren zur berührungslosen Vermessung eines sich entlang einer Bewegungsachse bewegenden Objekts mit den Merkmalen des Anspruchs 1 beziehungsweise Anspruch 15.

Die Erfindung geht von dem Grundgedanken aus, bei einer Sensoranordnung mit zwei Selbstmischende-Interferenz-Sensoren (SMI-Sensoren), die gegenläufige Messlichtstrahlen emittieren, durch geschickte Auswertung von Messsignalen der SMI-Sensoren eine Dimension von sich entlang einer in einer Bewegungsebene liegenden Bewegungsachse bewegenden dreidimensionalen Objekten, insbesondere Längen von quaderförmigen Objekten, zu ermöglichen.

Die erfindungsgemäße Vorrichtung zur Vermessung von sich in einer Bewegungsebene entlang einer Bewegungsachse bewegenden Objekten, umfasst eine erste Sensoranordnung mit einem ersten Selbstmischende-Interferenz-Sensor (SMI-Sensor) zum Aussenden von ersten Messlichtstrahlen entlang einer ersten Messachse. Der erste SMI-Sensor weist entlang der ersten Messachse einen ersten Arbeitsbereich auf, wobei aus dem ersten Arbeitsbereich zum ersten SMI-Sensor zurückreflektierte erste Messlichtstrahlen im ersten SMI-Sensor ein erstes Messsignal erzeugen. Der erste SMI-Sensor ist so ausgerichtet, dass die ausgesendeten ersten Messlichtstrahlen zumindest teilweise in Bewegungsrichtung des Objekts verlaufen, also eine Komponente parallel zur Bewegungsachse und in Bewegungsrichtung aufweisen. Die erste Messachse bildet also mit einer senkrecht zur Bewegungsachse stehenden Ebene einen ersten Winkel.

Die erste Sensoranordnung umfasst weiterhin einen zweiten SMI-Sensor zum Aussenden von zweitem Messlicht entlang einer zweiten Messachse. Der zweite SMI-Sensor weist entlang der zweiten Messachse einen zweiten Arbeitsbereich auf, wobei aus dem zweiten Arbeitsbereich zum zweiten SMI Sensor zurückreflektierte zweite Messlichtstrahlen im zweiten SMI Sensor ein zweites Messsignal erzeugen. Der zweite SMI-Sensor ist so ausgerichtet, dass die ausgesendeten zweiten Messlichtstrahlen zumindest teilweise entgegen der Bewegungsrichtung des Objekts verlaufen, also eine Komponente parallel zur Bewegungsachse und entgegen der Bewegungsrichtung aufweisen. Die zweite Messachse bildet also mit einer senkrecht zur Bewegungsachse stehenden Ebene einen zweiten Winkel, der sich mindestens im Vorzeichen von dem ersten Winkel unterscheidet, den die erste Messachse mit der senkrecht zur Bewegungsachse stehenden Ebene bildet.

Die SMI-Sensoren sind so eingerichtet, dass lediglich die aus den Arbeitsbereichen der SMI-Sensoren zurückreflektierten Messlichtstrahlen Messsignale erzeugen, die einer Weiterverarbeitung zugeführt werden. Die Arbeitsbereiche weisen jeweils ein dem SMI-Sensor zugewandtes Ende und ein dem SMI-Sensor abgewandtes Ende auf. Die Ausdehnung der Arbeitsbereiche, kann Prinzip bedingt sein, beispielsweise dadurch, dass aufgrund von Materialeigenschaften der zu vermessenden Objekte die Intensität zurückreflektierter Messlichtstrahlen ab einer bestimmten Entfernung vom SMI-Sensor nicht mehr ausreicht, um ein Messsignal zu erzeugen. Die Mitte eines Arbeitsbereichs kann beispielsweise im Bereich der Strahltaille des Messlichtstrahls liegen. Alternativ können die Arbeitsbereiche auf den SMI-Sensoren abgewandten Seiten der Arbeitsbereiche durch das Transportmedium begrenzt sein. Die den SMI-Sensoren abgewandten Enden der Arbeitsbereiche sind dann Schnittpunkte der Messachsen der Sensoren mit dem Transportmedium. Die Länge der Arbeitsbereiche kann auch durch entsprechende Entfernungsfilter der SMI-Sensoren eingestellt sein.

Der Abstand zwischen den von den SMI-Sensoren abgewandten Enden der Arbeitsbereiche parallel zur Bewegungsachse des Objekts definiert eine Messstrecke mit einer Messstreckenlänge, wobei die Messstreckenlänge einen positiven Betrag aufweist, wenn das dem ersten SMI-Sensor abgewandte Ende des ersten Arbeitsbereichs dem dem zweiten SMI-Sensor abgewandten Ende des zweiten Arbeitsbereichs in Bewegungsrichtung vorgeordnet ist. Die Messstreckenlänge weist einen negativen Betrag auf, wenn das dem ersten SMI-Sensor abgewandte Ende des ersten Arbeitsbereichs dem dem zweiten SMI-Sensor abgewandten Ende des zweiten Arbeitsbereichs in Bewegungsrichtung nachgeordnet ist.

Die Vorrichtung umfasst weiterhin eine Steuer- und Auswerteeinheit zum Empfangen des ersten und des zweiten Messsignals sowie zum Bestimmen einer Geschwindigkeit entlang der Bewegungsachse aus wenigstens einem der Messsignale. Alternativ kann eine Ermittlung der Geschwindigkeit aus den Messsignalen bereits in den SMI-Sensoren erfolgen.

Bei der Geschwindigkeit kann es sich sowohl um die Geschwindigkeit der zu vermessenden Objekte als auch um die Geschwindigkeit des Transportmediums handeln, falls sich letzteres im Arbeitsbereich der befindet.

Die Steuer- und Auswerteeinheit ist dazu ausgebildet, eine erste charakteristische Änderung des ersten Messsignals zu einem ersten Zeitpunkt, eine erste charakteristische Änderung des zweiten Messsignals zu einem zweiten Zeitpunkt zu und eine zweite charakteristische Änderung des ersten Messsignals zu einem dritten Zeitpunkt zu erfassen.

Als charakteristische Änderung des Messsignals des SMI-Sensors ist eine globale Änderung des Messsignals zu verstehen. Dies kann beispielsweise eine Änderung der Gesamtintensität des im Eingangs angegebenen Stand der Technik beschriebenen, modulierten SMI-Messsignals sein. Eine Änderung der Gesamtintensität kann bei Reflexion des Messlichts von Flächen unterschiedlicher Reflektivität auftreten, beispielsweise, wenn der SMI-Sensor sowohl das Transportmedium als auch auf dem Transportmedium befindliche Objekte erfasst, und das Reflexionsverhalten des Transportmediums sich derart von dem der zu erfassenden Objekte unterscheidet, dass eine signifikante, also eine über ein Signalrauschen hinausgehende Änderung der Gesamtintensität auftritt, wenn statt des Transportmediums ein Objekt erfasst wird.

Eine globale Änderung des Messsignals kann auch eine digitale Änderung umfassen, das heißt ein Vorhandensein oder nicht-Vorhandensein eines SMI-Messsignals. Dies kann beispielsweise dann auftreten, wenn sich das Transportmedium außerhalb eines Arbeitsbereichs des SMI-Sensors befindet. Das vom Transportmedium zurückreflektierte Messlicht reicht dann nicht aus, um im SMI-Sensor eine Interferenz zu erzeugen, wird also vom SMI-Sensor nicht erfasst. Ein Messsignal wird in diesem Fall erst dann erzeugt, wenn ein Objekt in den Arbeitsbereich des SMI-Sensors eintritt.

Zur Bestimmung einer Länge des Objektes ist die Steuer- und Auswerteeinheit dazu ausgebildet, unter Verwendung des ersten Zeitpunkts, des zweiten Zeitpunkts, des dritten Zeitpunkts, der ermittelten Objektgeschwindigkeit und der Messstreckenlänge eine Länge des Objekts entlang der Bewegungsachse zu bestimmen.

Die Erfindung hat den Vorteil, dass mit der Vorrichtung sowohl die Geschwindigkeit als auch eine Länge des Objektes bestimmt werden kann, ohne dass ein weiterer Sensor oder spezielle Markierungen auf dem Objekt nötig sind.

Insbesondere bei einer gleichförmigen Bewegung des Objekts ist eine einmalige Geschwindigkeitsermittlung, beispielsweise in einem Zeitraum zwischen dem ersten Zeitpunkt und dem dritten Zeitpunkt, zur Bestimmung der Länge des Objekts ausreichend. Die Steuer- und Auswerteeinheit kann weiterhin dazu ausgebildet sein, die ermittelten Geschwindigkeiten über die Zeit zu speichern. Dadurch kann auch bei nicht gleichförmiger Geschwindigkeit eine exakte Längenbestimmung des Objekts erfolgen.

Im Falle einer gleichförmigen Bewegung mit konstanter Geschwindigkeit kann die Steuer- und Auswerteeinheit dazu ausgebildet sein, aus einer ersten Zeitdifferenz zwischen dem dritten Zeitpunkt und dem ersten Zeitpunkt und der konstanten Geschwindigkeit einen Längenwert zu bestimmen, durch Addieren des Längenwerts und der Messstreckenlänge die Länge des Objekts entlang der Bewegungsachse zu ermitteln.

Zur exakteren Längenbestimmung kann die Steuer- und Auswerteeinheit zusätzlich oder alternativ dazu ausgebildet sein, bei variablen Geschwindigkeiten den Längenwert durch zeitliche Integration der zwischen dem ersten Zeitpunkt und dem dritten Zeitpunkt bestimmten Geschwindigkeiten zu ermitteln und die Länge des Objekts entlang der Bewegungsachse durch Addieren des Längenwerts und der Messstreckenlänge zu ermitteln.

Die Steuer- und Auswerteeinheit kann als integraler Teil der Sensoranordnung, als externe Einheit oder als Teil eines der SMI-Sensoren ausgeführt sein.

Die Steuer und Auswerteeinheit kann eine Schnittstelle zur Ausgabe der empfangenen Daten und/oder zur Ausgabe der Objektlänge, beispielsweise an eine Anzeigeeinheit oder eine übergeordnete Steuerung, aufweisen.

Die Messachsen des ersten und des zweiten SMI-Sensors können bezüglich der senkrecht zur Bewegungsachse stehenden Ebene bevorzugt betragsmäßig gleiche Winkel aufweisen. Durch solch eine symmetrische Anordnung wird die Datenverarbeitung vereinfacht.

Die Messachsen des ersten und des zweiten SMI-Sensors können bevorzugt in einer gemeinsamen Messebene liegen. Die Bewegungsachse des Objekts kann bevorzugt in der gemeinsamen Messebene liegen. Durch diese geometrische Anordnung wird die Datenverarbeitung weiter vereinfacht. Der erste und der zweite SMI-Sensor können so angeordnet sein, dass sich ihre Messachsen in einem Schnittpunkt in der gemeinsamen Messebene schneiden. Der Schnittpunkt kann dabei in der Mitte der Arbeitsbereiche der SMI Sensoren liegen

In einer alternativen Ausführungsform können die Messachsen des ersten und des zweiten SMI-Sensors in parallelen Messebenen liegen. Durch diese geometrische Anordnung werden Störsignale durch Reflektion der Messstrahlen an Optiken des jeweils anderen SMI-Sensors verhindert. Die Bewegungsachse des Objekts kann bevorzugt zwischen den Messebenen liegen. Der erste und der zweite SMI-Sensor können so angeordnet sein, dass die Entfernung der Mitten der Arbeitsbereiche der SMI-Sensoren minimal ist.

In einer Ausführungsform kann das Transportmedium in wenigstens einem Arbeitsbereich der SMI-Sensoren liegen. Damit kann eine Geschwindigkeit des Transportmediums bestimmt werden.

In einer alternativen Ausführungsform kann das Transportmedium außerhalb der Arbeitsbereiche der SMI-Sensoren liegen. Dies hat den Vorteil, dass eine zuverlässigere Objekterfassung erfolgen kann, da nur Messsignale von Objekten auf dem Transportmedium, aber nicht vom Transportmedium selbst erfasst werden.

Die Messstreckenlänge kann in einem Einlernprozess beispielsweise mit einem Messkörper definierter Länge bestimmt werden, wobei der Messkörper eine Reflektivität aufweist, die im Rahmen üblicher Toleranzen der Reflektivität der zu vermessenden Objekte entspricht. Sind die SMI Sensoren so angeordnet, dass ihre Arbeitsbereiche durch das Transportmedium begrenzt werden, ergibt sich die Messstreckenlänge aus dem Abstand der Schnittpunkte der Messlichtstrahlen mit dem Transportmedium.

Die Steuer- und Auswerteeinheit kann die Geschwindigkeit des Objekts entlang der Bewegungsachse unter Verwendung des ersten des zweiten Messsignals bestimmen, wobei ein Mittelwert der mit den beiden Sensoren gewonnenen Geschwindigkeit gebildet werden kann oder die Messsignale zur Geschwindigkeitsbestimmung wie in der EP 1 261 877 B1 beschrieben, subtrahiert werden. Dadurch wird eine genauere Geschwindigkeitsbestimmung ermöglicht.

In einer Ausführungsform der Erfindung kann eine zweite Sensoranordnung vorgesehen sein, die einen dritten und einen vierten SMI Sensor aufweist, wobei die Messachsen des dritten und des vierten SMI-Sensors vorzugsweise parallel zu den Messachsen des ersten und des zweiten SMI-Sensors ausgerichtet sein können. Die Verwendung einer zweiten Sensoranordnung hat den Vorteil, dass nicht nur eine Dimension, sondern durch Vergleich zeitlicher Verläufe charakteristischer Signaländerungen in der ersten Sensoranordnung und der zweiten Sensoranordnung eine Ausrichtung des Objekts auf dem Transportmedium bestimmt werden kann.

Im Folgenden wird die Erfindung anhand von Ausführungsbeispielen unter Bezugnahme auf die Zeichnungen im Einzelnen erläutert. Hierbei sind gleiche Teile in den Zeichnungen mit den gleichen Bezugszeichen gekennzeichnet. In den Zeichnungen zeigen:

Fig. 1    eine erfindungsgemäße Vorrichtung zur Vermessung eines sich entlang einer Bewegungsachse bewegenden Objekts;

Fig. 2    eine beispielhafte Abtastung eines Objekts mit einer erfindungsgemäßen Vorrichtung zu verschiedenen Zeitpunkten bei außerhalb der Arbeitsbereiche der SMI-Sensoren liegendem Transportmedium;

Fig. 3    eine Abtastung eines Objekts mit einer erfindungsgemäßen Vorrichtung zu verschiedenen Zeitpunkten bei innerhalb der Arbeitsbereiche der SMI-Sensoren liegendem Transportmedium;

Fig. 4    eine erfindungsgemäße Vorrichtung zur Vermessung eines sich entlang einer Bewegungsachse bewegenden Objekts mit zwei parallel angeordneten Sensoranordnungen;

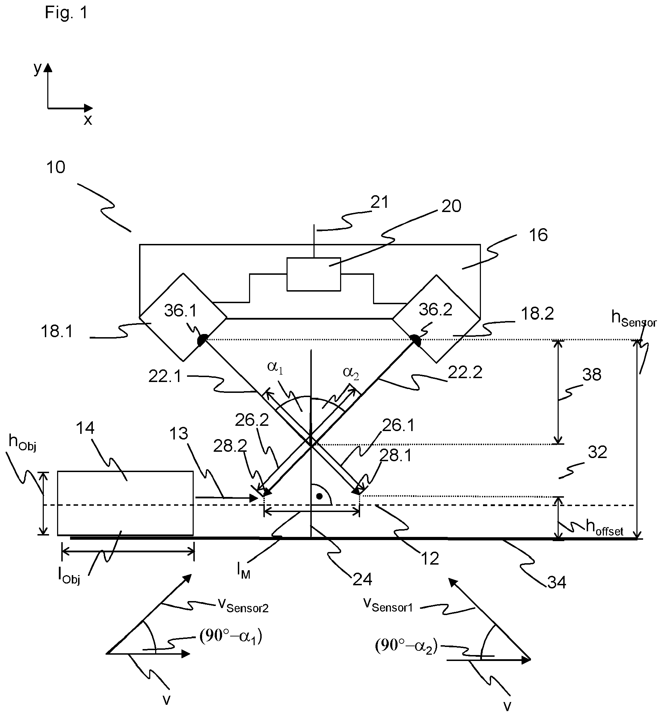

Figur 1 zeigt eine erfindungsgemäße Vorrichtung 10 zur Vermessung eines sich mit einer Geschwindigkeit v entlang einer Bewegungsachse 12 in einer Bewegungsrichtung 13 bewegenden Objekts 14. Die Vorrichtung 10 umfasst eine erste Sensoranordnung 16 mit einem ersten Selbstmischende-Interferenz-Sensor (SMI-Sensor) 18.1 und einem zweiten SMI-Sensor 18.2 sowie eine Steuer- und Auswerteeinrichtung 20 zur Steuerung der SMI-Sensoren 18.1, 18.2 und zum Empfangen und oder Auswerten von Messsignalen 44, 48 der SMI-Sensoren 18.1, 18.2. Die Steuer- und Auswerteeinrichtung 20 weist eine Schnittstelle 21 zur Weitergabe der Messsignale und/oder von Auswertungsergebnissen auf. Die Schnittstelle 21 kann auch zum Empfangen von Ansteuersignalen einer übergeordneten Steuerung eingerichtet sein. Der erste SMI-Sensor 18.1 sendet aus einer Apertur 36.1 Messlichtstrahlen entlang einer ersten Messachse 22.1 aus, die einen ersten Winkel $\alpha_1$ bezüglich einer senkrecht zur Bewegungsachse 12 stehenden Ebene 24 aufweist. Der zweite SMI-Sensor 18.2 sendet aus einer Apertur 36.2 Messlicht entlang einer zweiten Messachse 22.2 aus, die einen zweiten Winkel $\alpha_2$ bezüglich einer senkrecht zur Bewegungsachse 12 stehenden Ebene 24 aufweist. Die Winkel $\alpha_1$, $\alpha_2$ sind gerichtete Winkel mit einer Orientierung, die über ein Vorzeichen vor der Größe des Winkels angegeben wird. Im Ausführungsbeispiel weisen die Winkel den gleichen Betrag auf, es gilt $\alpha_2 = -\alpha_1$. Die Messachsen 22.1, 22.2 können weiterhin in einer gemeinsamen Messebene, im Ausführungsbeispiel die Zeichnungsebene, liegen. Liegt wie im Ausführungsbeispiel die Bewegungsachse 12 in oder parallel zur Messebene, so ergibt sich die Geschwindigkeit v des Objektes 14 aus den von den SMI-Sensoren 18.1, 18.2 bestimmten Geschwindigkeiten $v_{Sensor1}$, $v_{Sensor2}$ gemäß den Formeln

$$v = v_{Sensor_1} \cos(90 - \alpha_1)$$

beziehungsweise

$$v = v_{Sensor_2} \cos(90 - \alpha_2)$$

Der erste SMI-Sensor 18.1 und der zweite SMI-Sensor 18.2 weisen jeweils einen ersten Arbeitsbereich 26.1 und einen zweiten Arbeitsbereich 26.2 entlang den Messachsen 22.1, 22.2 auf, wobei lediglich aus den Arbeitsbereichen 26.1, 26.2 zurück reflektierte Messlichtstrahlen Messsignale 44, 48 erzeugen, die einer Weiterverarbeitung zugeführt werden. Das dem ersten SMI-Sensor 18.1 abgewandte Ende 28.1 des ersten Arbeitsbereichs 26.1 und das dem zweiten SMI-Sensor 18.2 abgewandte Ende 28.2 des zweiten Arbeitsbereichs 26.2 definieren eine Messstrecke parallel zur Bewegungsachse 12 des Objekts 14 mit einer Messstreckenlänge $l_M$. Da im Ausführungsbeispiel das dem ersten SMI-Sensor 18.1 abgewandte Ende 28.1 des ersten Arbeitsbereichs 26.1 dem dem zweiten SMI-18.2 abgewandten Ende 28.2 des zweiten Arbeitsbereichs 26.2 in Bewegungsrichtung 13 des Objekts 14 nachgeordnet ist, fließt die Messstreckenlänge $l_M$ mit einem negativen Betrag in eine Bestimmung der Objektlänge $l_{Obj}$ ein

Die erste Sensoranordnung 16 ist in einer Höhe $h_{Sensor}$ gemessen von den Aperturen 36.1, 36.2 der SMI-Sensoren 18.1, 18.2, über einem Transportmedium 34 angeordnet, auf oder mit dem sich das Objekt 14 bewegt. Im Ausführungsbeispiel liegen die den SMI-Sensoren 18.1, 18.2 abgewandten Enden 28.1, 28.2 der Arbeitsbereiche 26.1, 26.2 in einem Abstand $h_{offset}$ oberhalb des Transportmediums 34, so dass das Transportmedium 34 nicht von den SMI-Sensoren 18.1, 18.2 erfasst wird. Der vertikale Abstand 38 der Aperturen 36.1, 36.2 der SMI-Sensoren 18.1, 18.2 zum Schnittpunkt der Messachsen 22.1, 22.2 wird als Standoff Distance (SD) bezeichnet.

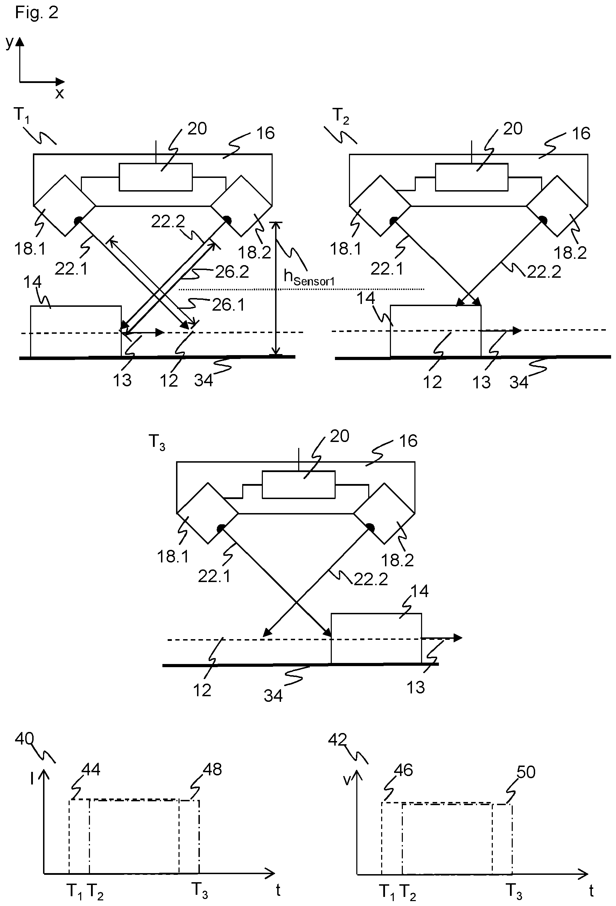

Figur 2 zeigt schematisch ein erstes Beispiel des Funktionsprinzips der erfindungsgemäßen Vorrichtung. Die Sensoranordnung 16 ist so in einer ersten Höhe $h_{Sensor1}$ über dem Transportmedium 34, beispielsweise einem Förderband, angeordnet, dass das Transportmedium 34 nicht in den Arbeitsbereichen 26.1, 26.2 der SMI-Sensoren 18.1, 18.2 liegt. Dadurch erzeugt das Transportmedium 34 in den SMI-Sensoren 18.1, 18.2 wie im Intensitäts-Zeit-Diagramm 40 in der linken unteren Ecke der Figur 2 gezeigt, kein Intensitätssignal. Die SMI-Sensoren 18.1, 18.2 der Sensoreinheit 16 liefern somit auch keine Geschwindigkeitssignale, wie im Geschwindigkeits-Zeit-Diagramm 42 in der rechten unteren Ecke der Figur 2 gezeigt.

Zu einem ersten Zeitpunkt $T_1$ tritt das Objekt 14, das sich entlang der Bewegungsachse 12 auf dem Transportmedium 34 bewegt, in die zweite Messachse 22.2 des zweiten SMI-Sensors 18.2 ein. Messlichtstrahlen, die vom zweiten SMI-Sensor 18.2 ausgesendet wurden, werden vom Objekt 14 reflektiert, gelangen zumindest teilweise entlang der zweiten Messachse 22.2 zurück zum zweiten SMI-Sensor 18.2 und erzeugen dort ein zweites Messsignal 44 mit einer Intensität I (gestrichelte Linie im Intensität-Zeit-Diagramm 40). Zum Zeitpunkt $T_1$ erfolgt also eine erste charakteristische Änderung des zweiten Messsignals 44, nämlich eine plötzliche Änderung der Intensität von einem Wert unter einer Nachweisgrenze zu einem Wert, bei dem der zweite SMI-Sensor 18.2 eine Geschwindigkeit v bestimmen kann, so dass auch das Geschwindigkeits-Zeit-Diagramm 42 ab dem Zeitpunkt $T_1$ ein von Null verschiedenes zweites Geschwindigkeitssignal 46 zeigt (gestrichelte Linie im Geschwindigkeits-Zeit-Diagramm 42).

Zu einem zweiten Zeitpunkt $T_2$ werden auch vom ersten SMI-Sensor 18.1 ausgesendete Messlichtstrahlen vom Objekt 14 reflektiert, gelangen zumindest teilweise entlang der ersten Messachse 22.1 zurück zum ersten SMI-Sensor 18.1 und erzeugen dort ein erstes Messsignal 48 mit einer Intensität I (Strichpunkt-Linie im Intensitäts-Zeit-Diagramm 40). Zum Zeitpunkt $T_2$ erfolgt also eine erste charakteristische Änderung des ersten Messsignals 48 analog zur Änderung des zweiten Messsignals 44 zum Zeitpunkt $T_1$. Dementsprechend liefert nun auch der erste SMI-Sensor 18.1 ein von Null verschiedenes zweites Geschwindigkeitssignal 50 (Strichpunkt-Linie im Geschwindigkeits-Zeit-Diagramm 42).

Zu einem dritten Zeitpunkt $T_3$ tritt das Objekt 14 aus der ersten Messachse 22.1 des ersten SMI-Sensors 18.1 aus. Damit erfolgt eine zweite charakteristische Änderung des ersten Messsignals 48, dessen Intensität ebenfalls wieder auf einen Wert unter der Nachweisgrenze fällt, womit auch kein erstes Geschwindigkeitssignal 50 mehr vorliegt.

Bei konstanter Objektgeschwindigkeit $v_{konst}$ ergibt sich aus geometrischen Überlegungen die Objektlänge $l_{Obj}$ zu

$$l_{Obj} = (T_3 - T_1) \cdot v_{konst} + l_M$$

wobei $l_M$ die Messstreckenlänge der Sensoranordnung 16 bezeichnet. Da im Ausführungsbeispiel das dem ersten SMI-Sensor 18.1 abgewandte Ende 28.1 des ersten Arbeitsbereichs 26.1 dem dem zweiten SMI-Sensor 18.2 abgewandten Ende 28.1 des zweiten Arbeitsbereichs 26,2 in Bewegungsrichtung 13 des Objekts 14 nachgeordnet ist, fließt die Messstreckenlänge $l_M$ mit einem negativen Betrag in eine Bestimmung der Objektlänge $l_{Obj}$ ein, wird also von der Länge, die sich aus der Differenz der Zeitpunkt $T_3$ und $T_1$ ergibt, abgezogen.

Bei variabler Objektgeschwindigkeit $v_{var}$ kann die Objektlänge $l_{Obj}$ unter Verwendung von über die Zeit in den SMI-Sensoren 18.1, 18.2 oder der Auswerteeinheit 20 gespeicherten, zeitabhängigen variablen Objektgeschwindigkeit $v_{var}(t)$ bestimmt werden. Es gilt dann:

$$l_{Obj} = \int_{T_1}^{T_3} v_{var}(t)\, dt + l_M$$

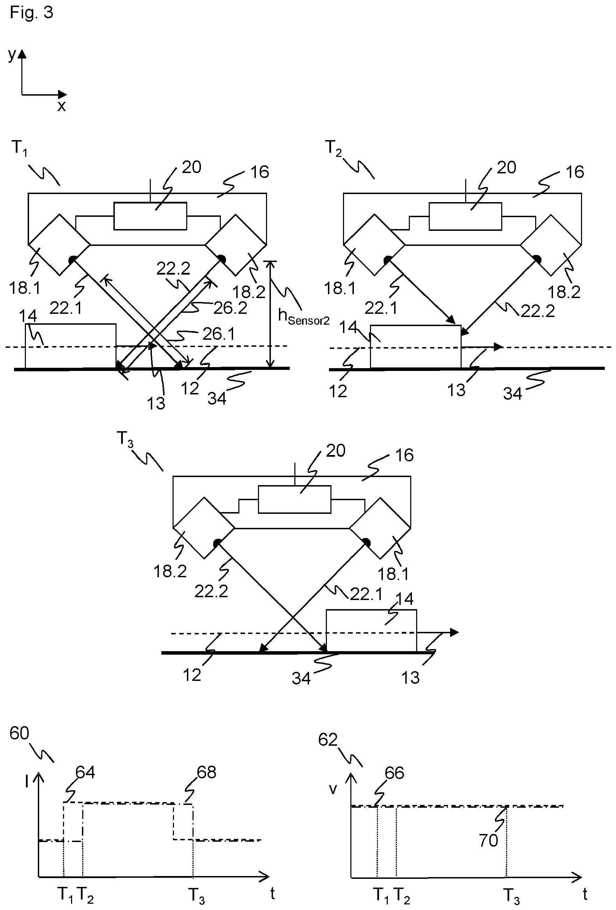

Figur 3 zeigt schematisch ein zweites Beispiel des Funktionsprinzips der erfindungsgemäßen Vorrichtung. Die Sensoranordnung 16 ist so in einer zweiten Höhe $h_{Sensor2}$ über dem Transportmedium 34, angeordnet, dass das Transportmedium 34 in den Arbeitsbereichen 26.1, 26.2 der SMI-Sensoren 18.1, 18.2 liegt. Dadurch erzeugt das Transportmedium 34 in den SMI-Sensoren 18.1, 18.2 wie im Intensitäts-Zeit-Diagramm 60 in der linken unteren Ecke der Figur 3 gezeigt, Intensitätssignale 64, 68. Die SMI-Sensoren 18.1, 18.2 der Sensoreinheit 16 liefern somit auch Geschwindigkeitssignale, wie im Geschwindigkeits-Zeit-Diagramm 62 in der rechten unteren Ecke der Figur 3 gezeigt.

Zu einem ersten Zeitpunkt $T_1$ tritt das Objekt

14, das sich in einer Bewegungsrichtung 13 entlang der Bewegungsachse 12 auf dem Transportmedium 34 bewegt, in die zweite Messachse 22.2 des zweiten SMI-Sensors 18.2 ein. Messlichtstrahlen, die vom zweiten SMI-Sensor 18.2 ausgesendet wurden, werden vom Objekt 14 reflektiert, gelangen zumindest teilweise entlang der zweiten Messachse 22.2 zurück zum zweiten SMI-Sensor 18.2. Aufgrund unterschiedlicher Reflektivität des Transportmediums 34 und des Objekts 14 (im Beispiel eine höhere Reflektivität des Objekts 14 im Vergleich zum Transportmedium 34) ändert sich die Intensität des zweiten Messsignals 64 (gestrichelte Linie im Intensität-Zeit-Diagramm 60). Zum Zeitpunkt $T_1$ erfolgt also eine erste charakteristische Änderung des zweiten Messsignals 64, nämlich eine plötzliche Erhöhung der Intensität, die vom zweiten SMI-Sensor 18.2 erfasst werden kann. Da sich das Objekt 14 mit derselben Geschwindigkeit v bewegt, wie das Transportmedium 34, ändert sich die vom zweiten SMI-Sensor 18.2 bestimmte Geschwindigkeit v und das entsprechende erste Geschwindigkeitssignal 66 (gestrichelte Linie im Geschwindigkeits-Zeit-Diagramm 62) nicht.

Zu einem zweiten Zeitpunkt $T_2$ werden auch vom ersten SMI-Sensor 18.1 ausgesendete Messlichtstrahlen vom Objekt 14 reflektiert und gelangen zumindest teilweise entlang der ersten Messachse 22.1 zurück zum ersten SMI-Sensor 18.1. Aufgrund unterschiedlicher Reflektivität des Transportmediums 34 und des Objekts 14 ändert sich auch hier wie beim Zeitpunkt $T_1$ die Intensität des ersten Messsignals 68 (Strichpunkt-Linie im Intensitäts-Zeit-Diagramm 60). Zum Zeitpunkt $T_2$ erfolgt also eine erste charakteristische Änderung des ersten Messsignals 68, nämlich eine plötzliche Erhöhung der Intensität, die vom ersten SMI-Sensor 18.1 erfasst werden kann. Da sich das Objekt 14 mit derselben Geschwindigkeit v bewegt, wie das Transportmedium 34, ändert sich auch die vom ersten SMI-Sensor 18.1 bestimmte Geschwindigkeit und das entsprechende erste Geschwindigkeitssignal 70 (Strichpunkt-Linie im Geschwindigkeits-Zeit-Diagramm 62) nicht.

Zu einem dritten Zeitpunkt $T_3$ tritt das Objekt 14 aus der ersten Messachse 22.1 des ersten SMI-Sensors 18.1 aus. Damit erfolgt eine zweite charakteristische Änderung des ersten Messsignals 68, dessen Intensität wieder auf den Wert vor dem zweiten Zeitpunkt $T_2$ fällt.

In dem in Fig. 3 beschriebenen Beispiel ist es also möglich, neben der Objektgeschwindigkeit v auch die Geschwindigkeit des Transportmediums zu bestimmen. Zur Längenbestimmung ist jedoch ein ausreichender Unterschied der Reflektivität von Transportmedium 34 und zu vermessendem Objekt 14 nötig, damit eine charakteristische Änderung der Intensität des Messsignals von den SMI-Sensoren 18.1, 18.2 erfasst und somit die Zeitpunkte $T_1$ bis $T_3$ zuverlässig bestimmt werden können. Die Längenbestimmung des Objekts 14 erfolgt wie im in Fig. 2 beschriebenen Beispiel.

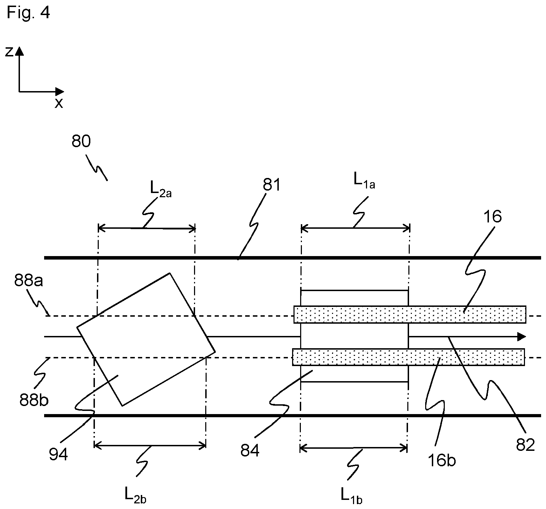

Fig. 4 zeigt eine schematische Darstellung einer Draufsicht einer weiteren Ausführungsform einer erfindungsgemäßen Vorrichtung 80, die eine wie in Figur 1 beschriebene erste Sensoranordnung 16 und eine zweite Sensoranordnung 16b aufweist. Die zweite Sensoranordnung 16b kann wie die erste Sensoranordnung 16 aufgebaut sein, wobei die Messachsen der SMI-Sensoren der ersten und zweiten Sensoranordnungen 16, 16b so ausgerichtet sind, dass die Messachsen in parallelen Messebenen 88a, 88b liegen.

Bewegen sich rechteckige Objekte 84, 94 auf einem Transportmedium 81 entlang einer Bewegungsachse 82 (beispielsweise Pakete auf einem Förderband) durch die Arbeitsbereiche der Sensoranordnungen 16, 16b, kann durch Bestimmen der Objektlängen $L_{1a}$, $L_{1b}$, $L_{2a}$, $L_{2b}$ sowie das Eintreten der Objekte in die Arbeitsbereiche beziehungsweise das Austreten der Objekte aus den Arbeitsbereichen der SMI-Sensoren der Sensoranordnungen 16, 16b, also durch Vergleich zeitlicher Verläufe charakteristischer Signaländerungen, die Ausrichtung der Objekte 84, 94 auf dem Transportmedium 81 bestimmt werden.

Sind beispielsweise wie beim ersten Objekt 84 die Seitenflächen des ersten Objekts parallel beziehungsweise senkrecht zu den Messebenen 88a, 88b der Sensoranordnungen 16, 16b ausgerichtet, ermitteln diese zum einen identische Längen $L_{1a}$, $L_{1b}$ des ersten Objekt 84, zum anderen wird das erste Objekt 84 im Rahmen üblicher Toleranzen gleichzeitig in die Arbeitsbereiche der SMI-Sensoren der Sensoranordnungen 16, 16b eintreten.

Sind wie beim zweiten Objekt 94 die Seitenflächen nicht parallel zu den Messebenen 88a, 88b der Sensoranordnungen 86a, 86b ausgerichtet, wird das zweite Objekt 94 zum einen zu unterschiedlichen Zeitpunkten in die Arbeitsbereiche der SMI-Sensoren der Sensoranordnungen 86a, 86b eintreten, zum anderen werden sich die ermittelten Längen $L_{2a}$, $L_{2b}$ des zweiten Objekt 94 unterscheiden. Sind die Dimensionen des Objekts bekannt, lässt sich so die Lage des Objekts 94 auf dem Transportmedium 81 bestimmen.

**Patentansprüche**

1. Vorrichtung (10) zur Vermessung eines Objekts (14), das sich in einer Bewegungsrichtung (13) entlang einer Bewegungsachse (12) bewegt, aufweisend:

    - eine erste Sensoranordnung (16) mit,

        - einem ersten Selbstmischende-Interferenz-Sensor (SMI-Sensor) (18.1), zum Aussenden von ersten Messlichtstrahlen entlang einer ersten Messachse (22.1), zum Empfangen von aus einem ersten Arbeitsbereich (26.1) des ersten SMI-Sensor (18.1) zurückreflektierten ersten Messlichtstrahlen und zum Erzeugen eines ersten Messsignals (48) aus den zurückreflektierten ersten Messlichtstrahlen, wobei der erste SMI-Sensor (18.1) derart ausgerichtet ist, dass die ausgesendeten ersten Messlichtstrahlen zumindest teilweise in der Bewegungsrichtung (13) des Objekts (14) verlaufen,

- einem zweiten SMI-Sensor (18.2) zum Aussenden von zweiten Messlichtstrahlen entlang einer zweiten Messachse (22.2), zum Empfangen von aus einem zweiten Arbeitsbereich (26.2) des zweiten SMI-Sensors (18.2) zurückreflektierten zweiten Messlichtstrahlen und zum Erzeugen eines zweiten Messsignals (44) aus den zurückreflektierten zweiten Messlichtstrahlen, wobei der zweite SMI-Sensor (18.2) derart ausgerichtet ist, dass die ausgesendeten zweiten Messlichtstrahlen zumindest teilweise entgegen der Bewegungsrichtung (13) des Objekts (14) verlaufen, wobei der erste Arbeitsbereich (26.1) ein dem ersten SMI Sensor (18.1) abgewandtes Ende (28.1) und der zweite Arbeitsbereich (26.2) ein dem zweiten SMI Sensor (18.2) abgewandtes Ende (28.2) aufweist, und die Enden (28.1, 28.2) eine Messstrecke mit einer Messstreckenlänge ($I_M$) parallel zur Bewegungsachse (12) definieren;

- eine Steuer- und Auswerteeinheit (20) zum Empfangen des ersten Messsignals (48) und des zweiten Messsignals (44) und zum Bestimmen einer Geschwindigkeit (v) des Objekts entlang der Bewegungsachse (12) aus wenigstens einem der Messsignale (44, 48), wobei die Steuer- und Auswerteeinheit (20) dazu ausgebildet ist,

- eine erste charakteristische Änderung des zweiten Messsignals (44) zu einem ersten Zeitpunkt ($T_1$) zu erfassen,

- eine erste charakteristische Änderung des ersten Messsignals (48) zu einem zweiten Zeitpunkt ($T_2$) zu erfassen,

- eine zweite charakteristische Änderung des ersten Messsignals (48) zu einem dritten Zeitpunkt ($T_3$) zu erfassen, und

unter Verwendung des ersten Zeitpunkts ($T_1$), des dritten Zeitpunkts ($T_3$), der Geschwindigkeit (v) und der Messstreckenlänge ($I_M$) eine Objektlänge ($I_{Obj}$) des Objekts (14) entlang der Bewegungsachse (12) zu bestimmen.

2. Vorrichtung (10) nach Anspruch 1, **dadurch gekennzeichnet, dass** die Steuer- und Auswerteeinheit (20) dazu ausgebildet ist, die Geschwindigkeit (v) über die Zeit zu speichern

3. Vorrichtung (10) nach Anspruch 1 oder 2, **dadurch gekennzeichnet, dass** die Steuer- und Auswerteeinheit (20) dazu ausgebildet ist, bei einer konstanten Geschwindigkeit ($v_{const}$) des Objekts (14) aus einer Zeitdifferenz zwischen dem dritten Zeitpunkt ($T_3$) und dem ersten Zeitpunkt ($T_1$) und der konstanten Geschwindigkeit ($v_{const}$) einen Längenwert zu ermitteln, und aus dem Längenwert und der Messstreckenlänge ($I_M$) die Länge des Objekts (14) entlang der Bewegungsachse (12) zu ermitteln.

4. Vorrichtung (10) nach Anspruch 2, **dadurch gekennzeichnet, dass** die Steuer- und Auswerteeinheit (20) dazu ausgebildet ist, bei einer variablen Geschwindigkeit ($v_{var}$) einen Längenwert durch zeitliche Integration der variablen Geschwindigkeiten ($v_{var}$) zwischen dem ersten Zeitpunkt ($T_1$) und dem dritten Zeitpunkt ($T_3$) zu ermitteln, und aus dem Längenwert und der Messstreckenlänge ($I_M$) die Länge des Objekts (14) entlang der Bewegungsachse (12) zu ermitteln.

5. Vorrichtung (10) nach einem der Ansprüche 3 oder 4, **dadurch gekennzeichnet, dass** die Messstreckenlänge ($I_M$) positiv ist, wenn das dem ersten SMI-Sensor (18.1) abgewandte Ende (28.1) des ersten Arbeitsbereichs (26.2) dem dem zweiten SMI-Sensor (18.2) abgewandten Ende (28.2) des zweiten Arbeitsbereichs (26.2) in Bewegungsrichtung (13) vorgeordnet ist, die Messstreckenlänge ($I_M$) negativ ist, wenn das dem ersten Sensor (18.1) abgewandte Ende (28.1) des ersten Arbeitsbereichs (26.2) dem dem zweiten SMI-Sensor (18.2) abgewandten Ende (28.2) des zweiten Arbeitsbereichs (26.2) in Bewegungsrichtung (13) nachgeordnet ist und die Steuer- und Auswerteeinheit (20) dazu ausgebildet ist, die Länge ($I_{Obj}$) des Objekts (14) durch Addition des Längenwerts und der Messstreckenlänge ($I_M$) zu bestimmen.

6. Vorrichtung (10) nach einem der vorhergehenden Ansprüche, **dadurch gekennzeichnet, dass** die erste Messachse (22.1) einen ersten Winkel ($\alpha_1$) bezüglich einer senkrecht zur Bewegungsachse (12) stehenden Ebene (24) und die zweite Messachse (22.2) einen zweiten Winkel ($\alpha_2$) bezüglich der senkrecht zur Bewegungsachse (12) stehenden Ebene (24) aufweist, wobei die Winkel ($\alpha_1$, $\alpha_2$) unterschiedliche Vorzeichen aufweisen und die Beträge der Winkel ($\alpha_1$, $\alpha_2$) gleich sind.

7. Vorrichtung (10) nach einem der vorhergehenden Ansprüche, **dadurch gekennzeichnet, dass** die erste Messachse (22.1) und die zweite Messachse (22.2) in einer gemeinsamen Messebene liegen.

8. Vorrichtung (10) nach Anspruch 7, **dadurch gekennzeichnet, dass** die Bewegungsachse (12) des Objekts (14) in der gemeinsamen Messebene liegt.

9. Vorrichtung (10) nach einem der Ansprüche 1 bis 6, **dadurch gekennzeichnet, dass** die erste Messachse (22.1) und die zweite Messachse (22.2) in parallelen Messebenen liegen.

10. Vorrichtung (10) nach Anspruch 9, **dadurch gekennzeichnet, dass** die Bewegungsachse (12) des Objekts (14) zwischen den parallelen Messebenen liegt

11. Vorrichtung (10) nach einem der vorhergehenden Ansprüche, **dadurch gekennzeichnet, dass** das Objekt (14) von einem Transportmedium (34) bewegt wird, wobei das Transportmedium (34) in wenigstens einem Arbeitsbereich (26.1, 26.2) der SMI-Sensoren (18.1, 18.2) liegt.

12. Vorrichtung (10) nach einem der Ansprüche 1 bis 10, **dadurch gekennzeichnet, dass** das Objekt (14) von einem Transportmedium (34) bewegt wird, wobei das Transportmedium (34) außerhalb der Arbeitsbereiche (26.1, 26.2) der SMI-Sensoren (18.1, 18.2) liegt.

13. Vorrichtung (10) nach einem der vorhergehenden Ansprüche, **dadurch gekennzeichnet, dass** die Steuer- und Auswerteeinheit (20) dazu ausgebildet ist, die Geschwindigkeit (v) entlang der Bewegungsachse (12) unter Verwendung des ersten und des zweiten Messsignals (44, 48) zu bestimmen.

14. Vorrichtung (80) nach einem der vorhergehenden Ansprüche, **dadurch gekennzeichnet, dass** die Vorrichtung (80) eine zweite Sensoranordnung (16b) mit einem dritten SMI-Sensor und einen vierten SMI-Sensor aufweist, wobei die Messachsen des dritten und des vierten SMI-Sensors parallel zu den Messachsen (22.1, 22.2) des ersten und des zweiten SMI-Sensors (18.1, 18.2) der ersten Sensoranordnung (16) ausgerichtet sind.

15. Verfahren zur Vermessung eines Objekts (14), das sich in einer Bewegungsrichtung (13) entlang einer Bewegungsachse (12) bewegt, mit den Schritten

- Aussenden von ersten Messlichtstrahlen mit einem ersten Selbstmischende-Interferenz-Sensor (SMI-Sensor) (18.1) einer ersten Sensoranordnung (16) entlang einer ersten Messachse (22.1), wobei der erste SMI-Sensor (18.1) derart ausgerichtet ist, dass die ausgesendeten ersten Messlichtstrahlen zumindest teilweise in Bewegungsrichtung (13) des Objekts (14) verlaufen,
- Empfangen von aus einem ersten Arbeitsbereich (26.1) des ersten SMI-Sensors (18.1) reflektierten ersten Messlichtstrahlen,
- Erzeugen eines ersten Messsignals (48) aus den reflektierten ersten Messlichtstrahlen,
- Aussenden von zweiten Messlichtstrahlen mit einem zweiten Selbstmischende-Interferenz-Sensor (SMI-Sensor) (18.2) der ersten Sensoranordnung (16) entlang einer zweiten Messachse (22.2), wobei der zweite SMI-Sensor (18.2) derart ausgerichtet ist, dass die ausgesendeten zweiten Messlichtstrahlen zumindest teilweise entgegen der Bewegungsrichtung (13) des Objekts (14) verlaufen,
- Empfangen von aus einem zweiten Arbeitsbereich (26.2) des zweiten SMI-Sensors (18.2) reflektierten zweiten Messlichtstrahlen,
- Erzeugen eines zweiten Messsignals (44) aus den reflektierten zweiten Messlichtstrahlen,

wobei der erste Arbeitsbereich (26.1) ein dem ersten SMI Sensor abgewandtes Ende (28.1) und der zweite Arbeitsbereich (26.2) ein dem zweiten SMI Sensor abgewandtes Ende (28.2) aufweist und die Enden (28.1, 28.2) eine Messstrecke mit einer Messstreckenlänge ($l_M$) parallel zur Bewegungsachse (12) definieren;

- Empfangen des ersten Messsignals (48) und des zweiten Messsignals (44) mit einer Steuer- und Auswerteeinheit (20) und
- Bestimmen einer Geschwindigkeit (v) entlang der Bewegungsachse (12) aus wenigstens einem der Messsignale (44, 48),

weiterhin

- Erfassen einer ersten charakteristischen Änderung des zweiten Messsignals (44) zu einem ersten Zeitpunkt ($T_1$),
- Erfassen einer ersten charakteristischen Änderung des ersten Messsignals (48) zu einem zweiten Zeitpunkt ($T_2$),
- Erfassen einer zweiten charakteristischen Änderung des ersten Messsignals (48) zu einem dritten Zeitpunkt ($T_3$), und
- Bestimmen einer Länge ($l_{Obj}$) des Objekts entlang der Bewegungsachse (12) unter Verwendung des ersten Zeitpunkts ($T_1$), des dritten Zeitpunkts ($T_3$), der Geschwindigkeit (v) und der Messstreckenlänge ($l_M$).

## Claims

1. Device (10) for measuring an object (14) moving in a direction of motion (13) along an axis of motion (12), comprising:

- a first sensor arrangement (16) having,

- a first self-mixing interference (SMI) sensor (18.1), for emitting first measuring light beams along a first measuring axis (22.1), for receiving first measuring light beams reflected back from a first working area (26.1) of the first SMI sensor (18.1), and for generating a first measurement signal (48) from the reflected-back first measurement light beams, wherein the first SMI sensor (18.1) is aligned in such a way that the emitted first measurement light beams run at least partially in the direction of movement (13) of the object (14),

- a second SMI sensor (18.2) for emitting second measuring light beams along a second measuring axis (22.2), for receiving second measuring light beams reflected back from a second operating range (26.2) of the second SMI sensor (18.2 ) and for generating a second measuring signal (44) from the reflected second measuring light beams, wherein the second SMI sensor (18.2) is aligned in such a way that the emitted second measuring light beams run at least partially counter to the direction of movement (13) of the object (14), wherein the first working area (26.1) has an end (28.1) facing away from the first SMI sensor (18.1) and the second working area (26.2) has an end (28.2) facing away from the second SMI sensor (18.2), and the ends (28.1, 28.2) define a measuring distance with a measuring distance length ($l_M$) parallel to the axis of movement (12);

- a control and evaluation unit (20) for receiving the first measurement signal (48) and the second measurement signal (44) and for determining a velocity (v) of the object along the axis of movement (12) from at least one of the measurement signals (44, 48), wherein the control and evaluation unit (20) is designed to detect
- a first characteristic change in the second measurement signal (44) at a first time ($T_1$)
- detect a first characteristic change in the first measurement signal (48) at a second time ($T_2$)
- detecting a second characteristic change of the first measurement signal (48) at a third time ($T_3$), and

determining an object length ($l_{Obj}$) of the object (14) along the axis of motion (12) using the first time ($T_1$), the third time ($T_3$), the velocity (v), and the measurement path length ($l_M$).

2. Device (10) according to claim 1, **characterized in that** the control and evaluation unit (20) is designed to store the velocity (v) over time

3. Device (10) according to claim 1 or 2, **characterized in that** the control and evaluation unit (20) is designed to determine a length value at a constant velocity ($v_{const}$) of the object (14) from a time difference between the third time ($T_3$) and the first time ($T_1$) and the constant velocity ($v_{const}$), and to determine the length of the object (14) along the axis of movement (12) from the length value and the measurement path length (l). $_M$

4. Device (10) according to claim 2, **characterized in that** the control and evaluation unit (20) is designed to determine, at a variable velocity ($v_{var}$), a length value by time integration of the variable velocities ($v_{var}$) between the first time ($T_1$) and the third time ($T_3$), and to determine the length of the object (14) along the axis of movement (12) from the length value and the measurement path length ($l_M$).

5. Device (10) according to one of claims 3 or 4, **characterized in that** the measuring path length ($l_M$) is positive if the end (28.1) of the first working area (26.2) facing away from the first SMI sensor (18.1) is arranged upstream of the end (28.2) of the second working area (26.2) facing away from the second SMI sensor (18.2) in the direction of movement (13), the measuring path length ($l_M$) is negative if the end (28.1) of the first working area (26.2) facing away from the first sensor (18.1) is arranged downstream of the end (28.2) of the second working area (26.2) facing away from the second SMI sensor (18.2) in the direction of movement (13), and the control and evaluation unit (20) is designed to determine the length ($l_{Obj}$) of the object (14) by adding the length value and the measuring path length ($l_M$).

6. Device (10) according to one of the preceding claims, **characterized in that** the first measuring axis (22.1) has a first angle ($\alpha_1$) with respect to a plane (24) perpendicular to the axis of movement (12) and the second measuring axis (22.2) has a second angle ($\alpha_2$) with respect to the plane (24) perpendicular to the axis of movement (12), the angles ($\alpha_1$, $\alpha_2$) having different signs and the amounts of the angles ($\alpha_1$, $\alpha_2$) being equal.

7. Device (10) according to one of the preceding claims, **characterized in that** the first measuring axis (22.1) and the second measuring axis (22.2) lie in a common measuring plane.

8. Device (10) according to claim 7, **characterized in that** the axis of movement (12) of the object (14) lies in the common measuring plane.

9. Device (10) according to one of claims 1 to 6, **char-**

**acterized in that** the first measuring axis (22.1) and the second measuring axis (22.2) lie in parallel measuring planes.

10. Device (10) according to claim 9, **characterized in that** the axis of movement (12) of the object (14) lies between the parallel measuring planes

11. Device (10) according to any one of the preceding claims, **characterized in that** the object (14) is moved by a transport medium (34), the transport medium (34) being located in at least one working area (26.1, 26.2) of the SMI sensors (18.1, 18.2).

12. Device (10) according to any one of claims 1 to 10, **characterized in that** the object (14) is moved by a transport medium (34), the transport medium (34) being located outside the working ranges (26.1, 26.2) of the SMI sensors (18.1, 18.2).

13. Device (10) according to any one of the preceding claims, **characterized in that** the control and evaluation unit (20) is adapted to determine the velocity (v) along the axis of movement (12) using the first and the second measurement signals (44, 48).

14. Device (80) according to any one of the preceding claims, **characterized in that** the device (80) comprises a second sensor arrangement (16b) comprising a third SMI sensor and a fourth SMI sensor, wherein the measurement axes of the third and fourth SMI sensors are aligned parallel to the measurement axes (22.1, 22.2) of the first and second SMI sensors (18.1, 18.2) of the first sensor arrangement (16).

15. Method for measuring an object (14) moving in a direction of movement (13) along an axis of movement (12), comprising the steps of

- emitting first measuring light beams with a first self-mixing interference sensor (SMI sensor) (18.1) of a first sensor arrangement (16) along a first measuring axis (22.1), wherein the first SMI sensor (18.1) is aligned in such a way that the emitted first measuring light beams run at least partially in the direction of movement (13) of the object (14),
- receiving first measuring light beams reflected from a first working area (26.1) of the first SMI sensor (18.1),
- generating a first measuring signal (48) from the reflected first measuring light beams,
- transmitting second measuring light beams with a second self-mixing interference sensor (SMI sensor) (18.2) of the first sensor arrangement (16) along a second measuring axis (22.2), the second SMI sensor (18.2) is aligned in such a way that the emitted second measuring light beams run at least partially counter to the direction of movement (13) of the object (14),
- receiving second measuring light beams reflected from a second working area (26.2) of the second SMI sensor (18.2),
- generating a second measuring signal (44) from the reflected second measuring light beams,

wherein the first working area (26.1) has an end (28.1) facing away from the first SMI sensor and the second working area (26.2) has an end (28.2) facing away from the second SMI sensor, and the ends (28.1, 28.2) define a measuring section with a measuring section length ($l_M$) parallel to the axis of movement (12);

- receiving the first measurement signal (48) and the second measurement signal (44) with a control and evaluation unit (20), and
- determining a velocity (v) along the axis of motion (12) from at least one of the measurement signals (44, 48),
and further
- detecting a first characteristic change of the second measuring signal (44) at a first time ($T_1$),
- detecting a first characteristic change of the first measuring signal (48) at a second time ($T_2$),
- detecting a second characteristic change of the first measuring signal (48) at a third time ($T_3$), and
- determining a length ($l_{Obj}$) of the object along the axis of motion (12) using the first time ($T_1$), the third time ($T_3$), the velocity (v), and the measurement distance length ($l_M$).

**Revendications**

1. Dispositif (10) pour mesurer un objet (14) qui se déplace dans une direction de déplacement (13) le long d'un axe de déplacement (12), présentant:

- un premier arrangement de capteurs (16) avec,

- un premier capteur d'interférence d'auto-mélange (capteur SMI) (18.1), pour émettre des premiers rayons lumineux de mesure le long d'un premier axe de mesure (22.1), pour recevoir des premiers rayons lumineux de mesure provenant d'une première zone de travail (26.1) du premier capteur SMI (18.1) et pour générer un premier signal de mesure (48) à partir des premiers rayons lumineux de mesure réfléchis, dans lequel le premier capteur SMI (18.1) est ajusté de telle sorte que les premiers rayons lumineux de mesure émis s'étendent au moins partiellement dans la direction de déplacement (13) de l'objet (14),

- un deuxième capteur SMI (18.2) pour émettre des deuxièmes rayons lumineux de mesure le long d'un deuxième axe de mesure (22.2), pour recevoir des rayons lumineux de mesure provenant d'une deuxième zone de travail (26.2) du deuxième capteur SMI (18.2) et pour générer un deuxième signal de mesure (44) à partir des deuxièmes rayons lumineux de mesure réfléchis, dans lequel le deuxième capteur SMI (18.2) est ajusté de telle sorte que les deuxièmes rayons lumineux de mesure émis s'étendent au moins partiellement à l'opposé de la direction de déplacement (13) de l'objet (14),

dans lequel la première zone de travail (26.1) comporte une extrémité (28.1) opposée au premier capteur SMI (18.1) et la deuxième zone de travail (26.2) comporte une extrémité (28.2) opposée au deuxième capteur SMI (18.2), et les extrémités (28.1, 28.2) définissent un trajet de mesure avec une longueur de trajet de mesure ($I_M$) parallèle à l'axe de déplacement (12);

- une unité de commande et d'évaluation (20) pour recevoir le premier signal de mesure (48) et le deuxième signal de mesure (44) et pour déterminer une vitesse (v) de l'objet le long de l'axe de déplacement (12) à partir d'au moins l'un des signaux de mesure (44, 48),

dans lequel l'unité de commande et d'évaluation (20) est configurée pour
- détecter une première modification caractéristique du deuxième signal de mesure (44) à un premier instant ($T_1$),
- détecter une première modification caractéristique du premier signal de mesure (48) à un deuxième instant ($T_2$),
- détecter une deuxième modification caractéristique du premier signal de mesure (48) à un troisième instant ($T_3$), et

pour déterminer une longueur d'objet ($I_{Obj}$) de l'objet (14) le long de l'axe de déplacement (12) en utilisant le premier instant ($T_1$), le troisième instant ($T_3$), la vitesse (v) et la longueur de la distance de mesure ($I_M$).

2. Dispositif (10) selon la revendication 1, **caractérisé en ce que** l'unité de commande et d'évaluation (20) est configurée pour mémoriser la vitesse (v) dans le temps.

3. Dispositif (10) selon la revendication 1 ou 2, **carac-**

**térisé en ce que** l'unité de commande et d'évaluation (20) est configurée pour déterminer, à une vitesse constante ($v_{const}$) de l'objet (14), une valeur de longueur à partir d'une différence de temps entre le troisième instant ($T_3$) et le premier instant ($T_1$) et la vitesse constante ($v_{const}$), et pour déterminer la longueur de l'objet (14) le long de l'axe de déplacement (12) à partir de la valeur de longueur et de la longueur de la section de mesure ($I_M$).

4. Dispositif (10) selon la revendication 2, **caractérisé en ce que** l'unité de commande et d'évaluation (20) est configurée pour déterminer, à une vitesse variable ($v_{var}$), une valeur de longueur par intégration temporelle des vitesses variables ($v_{var}$) entre le premier instant ($T_1$) et le troisième instant ($T_3$), et pour déterminer la longueur de l'objet (14) le long de l'axe de déplacement (12) à partir de la valeur de longueur et de la longueur de la section de mesure ($I_M$).

5. Dispositif (10) selon l'une des revendications 3 ou 4, **caractérisé en ce que** la longueur de la distance de mesure ($I_M$) est positive lorsque l'extrémité (28.1) de la première zone de travail (26.2) opposée au premier capteur SMI (18.1) est placée en amont de l'extrémité (28.2) de la deuxième zone de travail (26.2) opposée au deuxième capteur SMI (18.2) dans la direction de déplacement (13), la longueur de la distance de mesure ($I_M$) est négative lorsque l'extrémité (28.1) de la deuxième zone de travail (26.2) opposée au premier capteur (18.1) de la première zone de travail (26.2) est disposée en aval de l'extrémité (28.2) de la deuxième zone de travail (26.2) opposée au deuxième capteur SMI (18.2) dans le sens de déplacement (13) et l'unité de commande et d'évaluation (20) est configurée pour déterminer la longueur ($I_{Obj}$) de l'objet (14) en additionnant la valeur de la longueur et la longueur de la distance de mesure ($I_M$).

6. Dispositif (10) selon l'une des revendications précédentes, **caractérisé en ce que** le premier axe de mesure (22.1) comporte un premier angle ($\alpha_1$) par rapport à un plan (24) perpendiculaire à l'axe de déplacement (12) et le deuxième axe de mesure (22.2) comporte un deuxième angle ($\alpha_2$) par rapport au plan (24) perpendiculaire à l'axe de déplacement (12), dans lequel les angles ($\alpha_1$, $\alpha_2$) comportent des signes différents et les valeurs des angles ($\alpha_1$, $\alpha_2$) sont égales.

7. Dispositif (10) selon l'une des revendications précédentes, **caractérisé en ce que** le premier axe de mesure (22.1) et le deuxième axe de mesure (22.2) sont situés dans un plan de mesure commun.

8. Dispositif (10) selon la revendication 7, **caractérisé en ce que** l'axe de déplacement (12) de l'objet (14) est situé dans le plan de mesure commun.

9. Dispositif (10) selon l'une des revendications 1 à 6, **caractérisé en ce que** le premier axe de mesure (22.1) et le deuxième axe de mesure (22.2) sont situés dans des plans de mesure parallèles.

10. Dispositif (10) selon la revendication 9, **caractérisé en ce que** l'axe de déplacement (12) de l'objet (14) est situé entre les plans de mesure parallèles.

11. Dispositif (10) selon l'une des revendications précédentes, **caractérisé en ce que** l'objet (14) est déplacé par un milieu de transport (34), dans lequel le milieu de transport (34) est situé dans au moins une zone de travail (26.1, 26.2) des capteurs SMI (18.1, 18.2).

12. Dispositif (10) selon l'une des revendications 1 à 10, **caractérisé en ce que** l'objet (14) est déplacé par un milieu de transport (34), dans lequel le milieu de transport (34) est situé en dehors des zones de travail (26.1, 26.2) des capteurs SMI (18.1, 18.2).

13. Dispositif (10) selon l'une des revendications précédentes, **caractérisé en ce que** l'unité de commande et d'évaluation (20) est configurée pour déterminer la vitesse (v) le long de l'axe de déplacement (12) en utilisant le premier et le deuxième signal de mesure (44, 48).

14. Dispositif (80) selon l'une des revendications précédentes, **caractérisé en ce que** le dispositif (80) comporte un deuxième arrangement de capteurs (16b) avec un troisième capteur SMI et un quatrième capteur SMI, dans lequel les axes de mesure du troisième et du quatrième capteur SMI sont orientés parallèlement aux axes de mesure (22.1, 22.2) du premier et du deuxième capteur SMI (18.1, 18.2) du premier arrangement de capteurs (16).

15. Procédé pour mesurer un objet (14) qui se déplace dans une direction de déplacement (13) le long d'un axe de déplacement (12), comprenant les étapes

    - émettre des premiers rayons lumineux de mesure avec un premier capteur d'interférence d'auto-mélange (capteur SMI) (18.1) d'un premier arrangement de capteurs (16) le long d'un premier axe de mesure (22.1), dans lequel le premier capteur SMI (18.1) est ajusté de telle sorte que les premiers rayons lumineux de mesure émis s'étendent au moins partiellement dans la direction de déplacement (13) de l'objet (14),

    - recevoir des premiers rayons lumineux de mesure réfléchis à partir d'une première zone de travail (26.1) du premier capteur SMI (18.1),

    - générer un premier signal de mesure (48) à partir des premiers rayons lumineux de mesure réfléchis,

    - émettre des deuxièmes rayons lumineux de mesure avec un deuxième capteur d'interférences d'auto-mélange (capteur SMI) (18.2) du premier arrangement de capteurs (16) le long d'un deuxième axe de mesure (22.2), dans lequel le deuxième capteur SMI (18.2) est ajusté de telle sorte que les deuxièmes rayons lumineux de mesure émis s'étendent au moins partiellement à l'opposé de la direction de déplacement (13) de l'objet (14),

    - recevoir des deuxièmes rayons lumineux de mesure réfléchis à partir d'une deuxième zone de travail (26.2) du deuxième capteur SMI (18.2),

    - générer un deuxième signal de mesure (44) à partir des deuxièmes rayons lumineux de mesure réfléchis,

dans lequel la première zone de travail (26.1) comporte une extrémité (28.1) opposée au premier capteur SMI et la deuxième zone de travail (26.2) comporte une extrémité (28.2) opposée au deuxième capteur SMI et les extrémités (28.1, 28.2) définissent un trajet de mesure avec une longueur de trajet de mesure ($l_M$) parallèle à l'axe de déplacement (12) ;

    - recevoir le premier signal de mesure (48) et le deuxième signal de mesure (44) avec une unité de commande et d'évaluation (20) et

    - déterminer une vitesse (v) le long de l'axe de déplacement (12) à partir d'au moins l'un des signaux de mesure (44, 48),

    en outre

    - détecter d'une première modification caractéristique du deuxième signal de mesure (44) à un premier instant ($T_1$),

    - détecter une première modification caractéristique du premier signal de mesure (48) à un deuxième instant ($T_2$),

    - détecter une deuxième modification caractéristique du premier signal de mesure (48) à un troisième instant ($T_3$), et

    - déterminer une longueur ($l_{Obj}$) de l'objet le long de l'axe de déplacement (12) en utilisant le premier instant ($T_1$), le troisième instant ($T_3$), la vitesse (v) et la longueur de la distance de mesure ($l_M$).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1261877 B1
- EP 3035001 A1
- US 10379028 B
- US 2020064249 A
- WO 2009113001 A


**In der Beschreibung aufgeführte Nicht-Patentliteratur**

- VCSEL-based miniature laser-Doppler interferometer. *Proc. SPIE 6908, Vertical-Cavity Surface-Emitting Lasers,* 29. Januar 2008, vol. XII, 69080I, https://doi.org/10.1117/12.775131
- **GUIDO GIULIANI et al.** Laser diode self-mixing technique for sensing applications. *J. Opt. A: Pure Appl. Opt.,* 2002, vol. 4, S283, https://doi.org/10.1088/1464-4258/4/6/371
- **THOMAS TAIMRE et al.** Laser feedback interferometry: a tutorial on the self-mixing effect for coherent sensing. *Adv. Opt. Photon.,* 2015, vol. 7, 570-631, https://doi.org/10.1364/AOP.7.000570